# FASCICULE DE BREVET EUROPEEN

(11) **EP 4 538 655 B1**
(45) Date de publication et mention de la délivrance du brevet: **12.11.2025**
(21) Numéro de dépôt: 24205511.9
(22) Date de dépôt: 09.10.2024
(51) Int. Cl.: G01F 1/667, F03G 7/00, H02K 7/18, F03B 13/00, G01F 1/60, G01F 1/84, G01F 15/063, G01F 15/075

(54) **COMPTEUR DE FLUIDE À CIRCUIT DE SORTIE DE VEILLE**
FLÜSSIGKEITSZÄHLER MIT STANDBY-AUSGANGSSCHALTUNG
FLUID METER WITH STANDBY EXIT CIRCUIT

(30) Priorité: 12.10.2023 FR 2310957
(43) Date de publication de la demande: 16.04.2025
(73) Titulaire: SAGEMCOM ENERGY & TELECOM SAS, 92270 Bois-Colombes (FR)
(72) Inventeur: TEBOULLE, Henri, 92270 Bois Colombes (FR)
(74) Mandataire: Regimbeau

(56) Documents cités:
- CN-A- 105 547 614
- CN-A- 111 964 756
- FR-A1- 2 715 222
- US-A1- 2023 016 134

## Description

### Domaine technique

L'invention appartient au domaine technique des compteurs de fluide. Un compteur de fluide est un appareil de métrologie configuré pour effectuer des mesures métrologiques dans une canalisation de circulation de fluide. Le fluide peut être liquide, comme par exemple de l'eau ou du pétrole, ou gazeux, comme par exemple un mélange gazeux d'hydrocarbures constitué principalement de méthane tel que le gaz naturel. Les mesures métrologiques sont généralement un volume ou un débit relatif au fluide circulant dans la canalisation.

### Arrière-plan technologique

Afin de connaître certaines données métrologiques concernant la circulation d'un fluide dans une canalisation, un compteur de fluide est habituellement utilisé pour générer et rendre disponibles des mesures métrologiques. Afin de relever ces mesures métrologiques, des compteurs de fluide munis de moyens de communication d'informations relatives auxdites données métrologiques ont été développés. Ces moyens de communication peuvent être adaptés pour une communication à distance, et par exemple permettent une transmission filaire ou non de ces informations. Les moyens de communication peuvent également présenter plusieurs informations dans un affichage, organisées selon des menus. Dans tous les cas, ces compteurs métrologiques nécessitent une alimentation électrique. Or, les compteurs peuvent être disposés dans des emplacements ne permettant pas un raccordement aisé au réseau électrique, de sorte qu'ils doivent disposer d'une alimentation électrique autonome, non raccordée au réseau électrique.

La façon la plus simple d'alimenter en électricité de façon autonome un compteur de fluide est de munir celui-ci d'une pile électrique, c'est-à-dire d'un élément de stockage d'énergie non rechargeable in-situ. La capacité de stockage d'énergie doit cependant être suffisante pour permettre une alimentation électrique pendant une longue durée (typiquement 20 ans), ce qui se traduit par l'emploi de piles très volumineuses. En outre, la durée de vie de la pile dépend de la consommation électrique du compteur, qui peut singulièrement réduire la durée de vie de la pile, laquelle de toute façon finit par s'épuiser et doit être changée, opération fastidieuse nécessitant une surveillance de l'état de la pile.

Afin de pallier ces inconvénients, il a été proposé de remplacer la pile électrique par une batterie rechargeable, par exemple alimentée par un générateur électrique configuré pour être entraîné par la circulation du fluide dans la canalisation et générer de l'électricité rechargeant la batterie. Toutefois, l'aspect potentiellement intermittent de la circulation du fluide nécessite de disposer d'une batterie avec une capacité de stockage électrique importante, ce qui se traduit par un encombrement et des coûts élevés.

On connait déjà par FR 2 715 222 A un compteur de fluide selon le préambule de la revendication 1, qui comprend un générateur électrique de mesure entrainé par un fluide et une pile.

On connait également par US 2023/016134 A1 un compteur de fluide comportant un capteur métrologique qui est configuré pour effectuer des mesures métrologiques dans la canalisation de fluide.

### Présentation de l'invention

L'invention vise donc à proposer un compteur de fluide muni d'une fonctionnalité d'entrée et de sortie de veille qui permette de diminuer fortement la consommation électrique du compteur de fluide sans altérer la réactivité du compteur de fluide.

À cet effet, l'invention propose un compteur de fluide configuré pour effectuer des mesures métrologiques dans une canalisation de circulation de fluide et pour communiquer des informations relatives auxdites données métrologiques, comprenant :
- un générateur électrique configuré pour être entraîné par la circulation du fluide dans la canalisation de fluide et générer de l'électricité,
- au moins un capteur métrologique configuré pour effectuer des mesures métrologiques dans la canalisation de fluide,
- un bloc de commande configuré pour recevoir les mesures métrologiques et pour communiquer des informations relatives auxdites données métrologiques,
et le compteur de fluide comprend un premier circuit de sortie de veille couplé au générateur électrique à une première extrémité et au bloc de commande à une seconde extrémité, le premier circuit étant configuré pour générer un front sur un premier signal électrique à la seconde extrémité en réponse à l'établissement d'une tension à la première extrémité causée par l'entraînement du générateur électrique par la circulation du fluide dans la canalisation, le bloc de commande étant configuré pour mettre en œuvre une sortie de veille du compteur de fluide en réponse au front sur le premier signal électrique à la seconde extrémité.

Grâce au premier circuit de sortie de veille, le compteur de fluide peut être en veille profonde, d'une manière très énergétiquement économe puisque le premier circuit de sortie de veille ne comporte pas de composant actif consommant de l'énergie électrique, et peut cependant sortir de veille immédiatement au moment opportun, à savoir quand il convient de faire des mesures métrologiques, c'est-à-dire lorsque reprend la circulation de fluide dans la canalisation.

Le compteur de fluide comprend en outre un second circuit de sortie de veille comprenant un organe de commande couplé au bloc de commande.

L'organe de commande du second circuit de sortie de veille est configuré pour que son actionnement cause un front sur un second signal électrique à une troisième extrémité du bloc de commande,
le bloc de commande étant configuré pour mettre en œuvre une sortie de veille du compteur de fluide en réponse au front sur le second signal électrique à la troisième extrémité

Le compteur de fluide est avantageusement complété par les différentes caractéristiques suivantes prises seules ou selon leurs différentes combinaisons possibles :
- le compteur de fluide est configuré pour effectuer des mesures métrologiques dans la canalisation de fluide suite à la sortie de veille, et pour retourner en veille en fonction de la circulation de fluide dans la canalisation ;
- le compteur de fluide est configuré pour retourner en veille lorsque des mesures métrologiques font état d'un débit nul pendant un premier temps donné ou lorsque le générateur électrique n'est plus entraîné par la circulation du fluide dans la canalisation de fluide ;
- le premier circuit comprend un transistor configuré pour devenir passant en réponse à l'établissement de la tension à la première extrémité ;
- le transistor a sa grille ou sa base connectée à la première extrémité et à une première résistance, et est connecté à une tension de tension de travail par une seconde résistance, la seconde extrémité sur lequel s'applique le premier signal électrique étant connectée entre le transistor et la seconde résistance ;
- le bloc de commande est configuré pour mettre en œuvre une gestion d'interface homme-machine comprenant la communication d'informations relatives auxdites données métrologiques suite à la sortie de veille du compteur de fluide, le compteur de fluide étant configuré pour retourner en veille lorsqu'un critère de veille d'interface homme-machine est rempli ;
- le critère de veille d'interface homme-machine est une absence d'actionnement de l'organe de commande pendant un second temps donné ;
- la communication des informations relatives aux données métrologiques est effectuée par affichage sur un écran et/ou par transmission desdites données métrologiques
- le front est un front descendant.

L'invention concerne également un procédé de gestion de veille d'un compteur de fluide configuré pour effectuer des mesures métrologiques dans une canalisation de circulation de fluide et pour communiquer des informations relatives auxdites données métrologiques selon l'invention, le procédé comprenant :
- pendant une veille du compteur de fluide pendant laquelle un capteur métrologique configuré pour effectuer des mesures métrologiques dans la canalisation de fluide n'effectue pas de mesures métrologiques, la surveillance par un bloc de commande de la survenue d'un front sur un premier signal électrique à une seconde extrémité d'un premier circuit de sortie de veille couplé à une première extrémité à un générateur électrique configuré pour être entraîné par la circulation du fluide dans la canalisation de fluide et générer de l'électricité,
- suite à la détection par le bloc de commande d'un front sur le premier signal électrique à la seconde extrémité, la mise en œuvre par le bloc de commande d'une sortie de veille du compteur de fluide en réponse au front sur le premier signal électrique à la seconde extrémité, et
- le bloc de commande cause la mise en veille du compteur de fluide en fonction de la circulation de fluide dans la canalisation.

Le bloc de commande :
- surveille pendant une veille du compteur de fluide la survenue d'un front sur un second signal électrique à une troisième extrémité d'un second circuit de sortie de veille,
- met en œuvre une sortie de veille du compteur de fluide en réponse à un front sur le second signal électrique à la troisième extrémité,
- met en œuvre une gestion d'interface homme-machine comprenant la communication d'informations relatives auxdites données métrologiques suite à la sortie de veille du compteur de fluide,
- cause la mise en veille du compteur de fluide lorsqu'un critère de veille d'interface homme-machine est rempli.

L'invention concerne également un produit programme d'ordinateur lisible par ordinateur comprenant des instructions qui, lorsque le programme est exécuté par un bloc de commande d'un compteur de fluide selon l'invention, conduisent ledit bloc de commande à mettre en œuvre les étapes du procédé selon l'invention. Le produit programme d'ordinateur est typiquement un support non-transitoire lisible par ordinateur comprenant des instructions qui, lorsque le programme est exécuté par un bloc de commande d'un compteur de fluide selon l'invention, conduisent ledit bloc de commande à mettre en œuvre les étapes du procédé selon l'invention. Un tel support lisible par ordinateur peut être par exemple un disque dur, un disque SSD, une mémoire flash, ou un disque optique.

### Présentation des figures

D'autres caractéristiques, buts et avantages de l'invention ressortiront de la description qui suit, qui est purement illustrative et non limitative, et qui doit être lue en regard des dessins annexés sur lesquels :
- la figure 1 est une vue d'ensemble schématique d'un compteur de fluide selon un mode de réalisation possible de l'invention ;
- la figure 2 est un diagramme de sortie de veille par la turbine d'un compteur de fluide selon un mode de réalisation possible de l'invention ;
- la figure 3 est un diagramme de sortie de veille par appui sur l'organe de commande d'un compteur de fluide selon un mode de réalisation possible de l'invention.

### Description détaillée

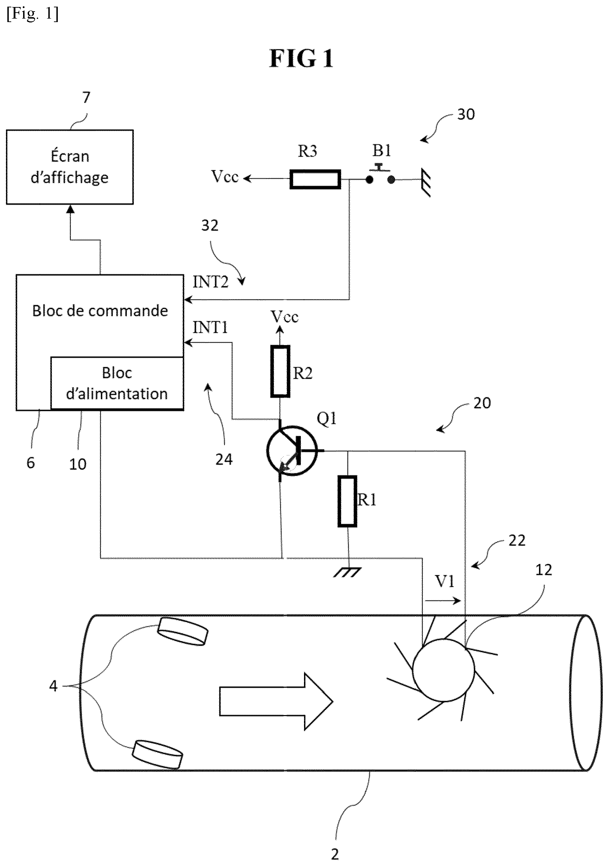

La **Figure 1** montre un compteur de fluide configuré pour effectuer des mesures métrologiques dans une canalisation 2 de circulation de fluide et pour communiquer des informations relatives auxdites données métrologiques. Typiquement, la canalisation 2 de circulation de fluide fait partie du compteur de fluide au sens où le compteur de fluide comprend une portion de conduite dans laquelle circule le fluide, qui est intégrée au réseau de circulation du fluide. Pour effectuer des mesures métrologiques, le compteur de fluide comprend au moins un capteur métrologique 4 configuré pour effectuer des mesures métrologiques dans la canalisation de fluide 2. Le capteur métrologique 4 est de préférence disposé dans la canalisation de fluide 2. Le type de capteur métrologique 4 dépend de la technologie utilisée pour effectuer les mesures, qui peut être une technologie ultrasonore, électromagnétique, thermique ou à effet Coriolis. Dans l'exemple illustré, deux transducteurs ultrasonores sont disposés l'un en face de l'autre dans la canalisation afin de procéder à des mesures métrologiques par ultrasons, de façon connue. Les mesures métrologiques sont généralement un volume ou un débit relatifs au fluide circulant dans la canalisation 2, dérivées des données récoltées par le ou les capteurs métrologiques 4.

Le compteur de fluide comprend un bloc de commande 6 comprenant au moins un processeur et une mémoire, et qui est configuré pour recevoir les mesures métrologiques en provenance du capteur métrologique 4, et pour communiquer les informations relatives auxdites données métrologiques. Typiquement, le capteur métrologique 4 peut être relié au bloc de commande 6, par exemple par une liaison filaire, et transmet les mesures métrologiques au bloc de commande 6.

La communication des informations relatives aux données métrologiques est effectuée par affichage sur un écran et/ou par transmission. Le compteur de fluide peut disposer d'un écran d'affichage 7 où peuvent être affichées les informations relatives aux données métrologiques. Le compteur de fluide peut être muni d'une interface homme-machine tel qu'un bouton permettant de causer l'affichage de ces informations relatives aux données métrologiques, et éventuellement de faire varier cet affichage, par exemple en permettant d'en faire défiler différents types sur l'écran d'affichage 7. Les informations relatives aux données métrologiques peuvent être transmises à l'extérieur du compteur de fluide, de préférence par une liaison non filaire, auquel cas le compteur de fluide peut comprendre une antenne et tout autre élément connu permettant d'établir une communication à distance avec le compteur de fluide. Les informations relatives aux données métrologiques peuvent par exemple être un débit instantané, un cumul de débit (un volume), un débit moyen, etc.

De préférence, le compteur de fluide est conforme à la directive de l'Union Européenne 2014/32/EU concernant les instruments de mesure, plus connu sous l'acronyme anglais de MID pour « Measuring Instruments Directive ». En particulier, le compteur de fluide doit pouvoir en permanence être capable de communiquer des informations relatives aux données métrologiques. De même, le compteur de fluide doit pouvoir à tout moment permettre de procéder aux mesures métrologiques. Par conséquent, le compteur de fluide doit disposer en permanence d'une alimentation électrique.

À cet effet, le compteur de fluide comprend un bloc d'alimentation 10 configuré pour alimenter en permanence en électricité le bloc de commande 6. Le bloc d'alimentation 10 comprend au moins un élément de stockage d'énergie, et en particulier au moins une batterie ou pile. On entend par pile (ou « primary cell » en anglais) un élément de stockage d'énergie électrique qui ne peut pas être rechargée, ou dont la configuration dans le bloc d'alimentation rend impossible la charge au sein de ce bloc d'alimentation. La pile présente de préférence une réserve d'énergie maximale inférieure à 100 Wh, comme par exemple 30,6 Wh (8,5 Ah sur 3,6 V) ou 68,4 Wh (19 Ah sur 3,6 V).

Le compteur de fluide comprend également un générateur électrique 12 configuré pour être entraîné par la circulation du fluide dans la canalisation et générer de l'électricité. De préférence, le générateur électrique 12 étant couplé au bloc de commande 6, par exemple au bloc d'alimentation 10. Au moins une partie de générateur électrique 12 est disposé dans la canalisation 2 au contact du fluide afin de prélever une énergie mécanique et de la convertir en électricité. Typiquement, ce générateur électrique 12 est une turbine, de préférence à ailettes, intégrant un rotor et un stator. Le générateur électrique 12 fournit de l'électricité disponible à l'extérieur de la canalisation 2. De préférence, le générateur électrique 12 est disposé en aval, dans le sens de circulation du fluide, par rapport au capteur métrologique 4 dans la canalisation 2 de fluide, afin de ne pas perturber ces mesures métrologiques.

En surplus ou en alternative à la pile, le bloc d'alimentation 10 peut comprendre un élément de stockage d'énergie électrique rechargeable par le générateur électrique 12. Dans ce cas, le générateur électrique 12 peut être couplé au bloc d'alimentation 10 du bloc de commande 6 pour alimenter l'élément de stockage d'énergie électrique rechargeable. L'élément de stockage d'énergie électrique rechargeable peut par exemple être une batterie rechargeable ou un condensateur, présentant de préférence une réserve d'énergie maximale Eₘₐₓ supérieure ou égale à 0.5 Wh, et de préférence encore supérieure ou égale à 0.8 Wh. Le condensateur est de préférence un supercondensateur. Typiquement, le condensateur peut être un supercondensateur à couche hybride, ou HLC pour l'anglais « Hybrid Layer Capacitor », mais peut également être tout type de supercondensateur permettant d'offrir une réserve d'énergie maximale Eₘₐₓ supérieure ou égale à 0.5 Wh. De préférence, l'énergie maximale Eₘₐₓ du condensateur est inférieure d'au moins 20 fois à l'énergie maximale d'une pile si celle-ci est présente. Par exemple, L'élément de stockage d'énergie électrique rechargeable peut délivrer une charge électrique de 0.222 Ah sur 3.6 V.

En veille, le compteur de fluide ne met pas en œuvre des mesures métrologiques dans la canalisation de fluide. Par exemple, lorsque le capteur métrologique 4 comprend des transducteurs ultrasonores, ceux-ci n'émettent pas d'ultrasons lorsque le compteur de fluide est en veille. De même, en veille, il n'y a pas de communication d'informations relatives aux données métrologiques, par exemple par affichage sur un écran et/ou par transmission desdites données métrologiques. Toutes ou la plupart des fonctions du compteur de fluide peuvent être désactivées lors de la veille. La consommation électrique est alors nulle ou quasi-nulle, ce qui permet de ne pas consommer l'énergie de l'élément de stockage électrique tels que la pile ou le condensateur. L'élément de stockage électrique peut alors être choisi avec une capacité de stockage plus faible, réduisant son volume et son coût.

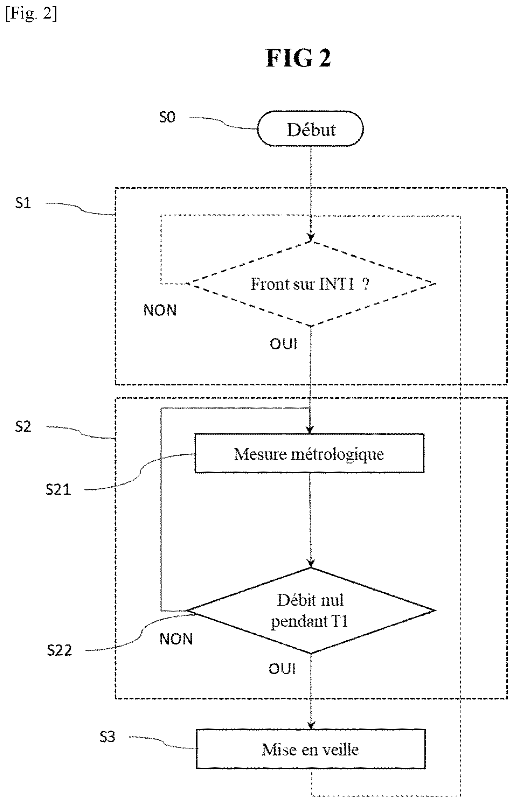

Il convient cependant de pouvoir sortir de veille le compteur de fluide de façon la plus efficace possible. En référence à la **Figure 1** et à la **Figure 2****,** le compteur de fluide comprend un premier circuit électrique 20 couplé au générateur électrique 12 à une première extrémité 22 et au bloc de commande 6 à une seconde extrémité 24. En l'absence de circulation de fluide dans la canalisation de fluide 2, le générateur électrique 12 ne tourne pas et il n'y a pas de tension aux bornes de la première extrémité 22 couplée au générateur électrique. Lorsque le générateur électrique 12 est entraîné par la circulation du fluide dans la canalisation de fluide 2, une tension V1 non nulle apparaît aux bornes de la première extrémité 22, qui reflète l'électricité générée par le générateur électrique 12. Sur la seconde extrémité 24 s'applique un premier signal électrique INT1. Le premier circuit électrique 20 est configuré pour générer un front sur le premier signal électrique INT1 à la seconde extrémité 24 en réponse à l'établissement d'une tension V1 à la première extrémité causée par l'entraînement du générateur électrique par la circulation du fluide dans la canalisation de fluide 2.

Le premier circuit électrique 20 comprend un transistor Q1 configuré pour devenir passant en réponse à l'établissement de la tension V1 à la première extrémité 22. De préférence, le transistor est un transistor NPN plutôt que PNP. Plus précisément, le transistor Q1 a sa grille ou sa base connectée à la première extrémité 22 et à une première résistance R1 reliée à la masse, et est connecté à une tension de tension de travail Vcc par une seconde résistance R2, la seconde extrémité 24 sur lequel s'applique le premier signal INT1 étant connectée entre le transistor Q1 et la seconde résistance R2. La tension de travail Vcc est typiquement choisie pour permettre aux différents composants alimentés de fonctionner, et peut être comprise entre 3 V et 4 V, et est par exemple de 3,3 V. Les résistances R1 et R2 peuvent par exemple avoir des valeurs de résistance comprises entre 0,5 et 10 kΩ.

Dans cet exemple, le transistor Q1 est un transistor bipolaire NPN dont la base est couplée à la première extrémité 22, tandis que son émetteur est connecté à la masse (ou à tout autre tension différente de la tension de travail et permettant au transistor Q1 de devenir passant), et que sont collecteur est couplé à la fois à la seconde résistance R2, et à la deuxième extrémité 24. D'autres configurations pourraient être envisagées, comme par exemple l'utilisation d'un transistor à effet de champ à grille isolée (ou « MOSFET »), avec la grille remplaçant la base, la source l'émetteur, et le drain le collecteur.

Tant que le transistor V1 est bloquant, le premier signal électrique à la deuxième extrémité garde une tension constante imposée par la tension de travail Vcc. Lorsqu'une tension V1 non nulle s'établit à la première extrémité 22 suite à l'entraînement du générateur électrique 12, le transistor Q1 devient passant, connectant la deuxième extrémité 24 à la masse via le transistor Q1. La deuxième extrémité 24 subit donc une variation brusque de tension, et le premier signal électrique présente un front. De préférence, le front est un front descendant comme dans l'exemple illustré mais pourrait être un front montant dans une autre configuration.

Le bloc de commande 6 est configuré pour mettre en œuvre une sortie de veille du compteur de fluide en réponse au front sur le premier signal électrique INT1 à la seconde extrémité 24. Ainsi qu'illustré sur la **Figure 2****,** en partant d'un état initial S0, le compteur de fluide est en veille, et le bloc de commande 6 surveille le premier signal électrique INT1 pour y détecter un front (étape S1). En l'absence de front sur le premier signal électrique INT1, le compteur de fluide reste à l'état de veille. Si un front sur le premier signal électrique INT1 est détecté, le bloc de commande cause la sortie de veille du compteur de fluide (étape S2). La sortie de mise en veille implique la réactivation de fonctions du compteur de veille qui n'étaient pas actives pendant la mise en veille, et en particulier la mise en œuvre des mesures métrologiques, mais possiblement d'autres fonctions comme l'enregistrement de données. Le compteur de fluide est donc configuré pour effectuer des mesures métrologiques (étape S21) dans la canalisation de fluide 2 suite à la sortie de veille. Le compteur de fluide peut également être configuré pour effectuer la communication des informations relatives aux données métrologiques suite à la sortie de veille.

Le bloc de commande 6 commande le retour en veille du compteur de fluide en fonction de la circulation de fluide dans la canalisation 2, et plus précisément la mise en veille est causée par l'absence de la circulation de fluide dans la canalisation 2. De préférence, le retour en veille se fait sur la base des résultats des mesures métrologiques. Le compteur de fluide peut être configuré pour retourner en veille lorsque des mesures métrologiques font état d'un débit nul ou insuffisant (typiquement sous un seul de débit) pendant un premier temps donné T1 (étape S22). Ce premier temps donnée T1 est de préférence compris entre 1s et 30s, et est par exemple de 5s.

Le compteur de fluide peut être configuré pour retourner en veille lorsque le générateur électrique 12 n'est plus entraîné par la circulation du fluide dans la canalisation de fluide 2, par exemple lorsqu'une tension aux bornes du générateur électrique devient quasi-nulle, inférieure à un seuil. De fait, en l'absence de circulation de fluide dans la canalisation 2, la tension V1 à la première extrémité 22 redevient nulle, et le transistor Q1 redevient bloquant. La deuxième extrémité 24 se retrouve ainsi isolée de la masse, et retrouve une tension liée à la tension de travail Vcc. Le premier signal électrique INT1 présente alors un front, typiquement montant comme ici, indiquant l'absence de circulation fluide. La détection de ce front sur le premier signal électrique INT1 par le bloc de commande 6 peut être utilisée pour causer la mise en veille du compteur.

Lorsqu'à été constatée l'absence de circulation de fluide dans la canalisation 2 par le bloc de commande 6, le compteur de fluide se met en veille (étape S3), et le bloc de commande 6 recommence à surveiller le premier signal électrique INT1 pour y détecter un front (étape S1).

Le premier circuit électrique 20 permet de limiter les mesures métrologiques aux seuls instants où celles-ci sont pertinentes et utiles, à savoir lorsque du fluide circule dans la canalisation 2. Le premier circuit électrique 20 permet la sortie de veille dès le début de l'entraînement du générateur électrique 12 par la circulation du fluide, assurant ainsi que toute circulation de fluide sera mesurée. En outre, le premier circuit électrique 20 ne consomme aucune électricité en veille, au contraire de systèmes qui par exemple reposeraient sur des capteurs.

Afin d'assurer la sortie de veille à tout moment par un utilisateur, notamment pour permettre la communication des informations relatives aux données métrologiques, le compteur de fluide comprend un second circuit de sortie de veille 30 comprenant un organe de commande B1 couplé au bloc de commande S1 par une troisième extrémité 32. L'organe de commande B1 est configuré pour que son actionnement cause un front sur un second signal électrique INT2 à la troisième extrémité 32. En particulier, l'organe de commande B1 peut garder le deuxième circuit 30 ouvert lorsqu'il n'est pas actionné, et ferme le deuxième circuit 30 lorsqu'il est actionné. L'organe de commande B1 est de préférence un interrupteur prépositionné, dont les contacts et l'organe de manœuvre reviennent à une position ouverte lorsque l'organe de manœuvre est relâché à la suite d'une commande. Par exemple, l'organe de commande B1 peut être un bouton poussoir. L'organe de commande B1 peut faire partie de l'interface-homme machine évoquée plus haut.

Dans l'exemple illustré, l'organe de commande B1 est relié à une tension de travail Vcc, par l'intermédiaire d'une troisième résistance R3, et la masse, ou tout autre tension différente de la tension de travail Vcc. La troisième extrémité 32 est reliée à l'organe de commande B1 et à la troisième résistance R3. La troisième résistance R3 peut par exemple avoir une valeur de résistance comprise entre 0,5 et 10 kΩ.

Lorsqu'un utilisateur actionne l'organe de commande B1, par exemple en appuyant sur le bouton-poussoir, la troisième extrémité 32 devient reliée à la masse, et la troisième extrémité 32 subit donc une variation brusque de tension, et le deuxième signal électrique INT2 présente un front. De préférence, le front est un front descendant comme dans l'exemple illustré mais pourrait être un front montant dans une autre configuration.

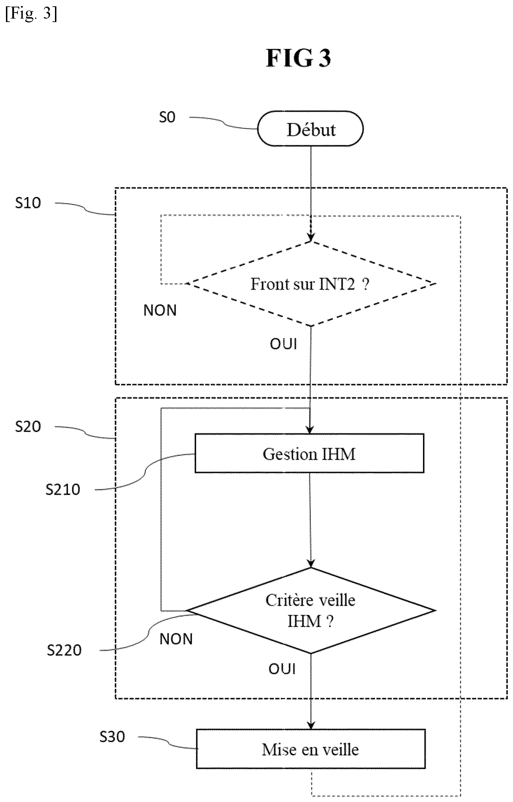

Le bloc de commande 6 est configuré pour mettre en œuvre une sortie de veille du compteur de fluide en réponse au front sur le second signal électrique à la troisième extrémité 32. Ainsi qu'illustré sur la **Figure 3****,** en partant d'un état initial S0, le compteur de fluide est en veille, et le bloc de commande 6 surveille le deuxième signal électrique INT2 pour y détecter un front (étape S10). En l'absence de front sur le deuxième signal électrique INT2, le compteur de fluide reste à l'état de veille. Si un front sur le deuxième signal électrique INT2 est détecté, le compteur de fluide sort de veille (étape S20).

Le bloc de commande 6 est configuré pour mettre en œuvre une gestion d'interface homme-machine (étape S210) comprenant la communication d'informations relatives auxdites données métrologiques suite à la sortie de veille du compteur de fluide. La communication des informations relatives aux données métrologiques est par exemple effectuée par affichage sur l'écran 7 et/ou par transmission des données métrologiques. Ainsi, l'utilisateur, en actionnant l'organe de commande B1 peut accéder aux informations relatives aux données métrologiques, et à d'autres informations éventuelles, comme par exemple un numéro de compteur. La gestion d'interface homme-machine peut faire intervenir des périphériques d'entrée-sortie comme par exemple un ou des boutons, avec lesquelles l'utilisateur peut interagir pour commander le compteur de fluide. Par exemple, l'utilisateur peut modifier l'affichage sur l'écran 7, typiquement pour naviguer entre des menus ou changer les données affichées. L'utilisateur peut également modifier des informations relatives aux données métrologiques, comme par exemple réinitialiser un cumul de débit ou volume.

Le compteur de fluide est configuré pour retourner en veille lorsqu'un critère de veille d'interface homme-machine est rempli (étape S220). De préférence le critère de veille est basé sur une interaction avec un utilisateur. Par exemple, le critère de veille d'interface homme-machine est une absence d'actionnement de l'organe de commande B1 pendant une seconde durée donnée T2. Cette seconde durée donnée T2 est de préférence compris entre 1s et 30s, et est par exemple de 5s. Si le critère de veille d'interface homme-machine n'est pas rempli, par exemple parce que l'organe de commande B1 a été actionné depuis moins que la seconde durée T2, le compteur de fluide continue la gestion de l'interface homme-machine (étape S210). Si en revanche le critère de veille d'interface homme-machine est rempli, par exemple parce que l'organe de commande B1 n'a pas été actionné pendant au moins la seconde durée T2, le compteur de fluide se remet en veille (étape S30), et interrompt la gestion de l'interface homme-machine.

Le compteur de fluide retourne en veille en fonction de la circulation de fluide dans la canalisation 2 ou plutôt est causé par l'absence de la circulation de fluide dans la canalisation 2. De préférence, le retour en veille se fait sur la base des résultats des mesures métrologiques. Le compteur de fluide peut être configuré pour retourner en veille lorsque des mesures métrologiques font état d'un débit nul ou insuffisant (typiquement sous un seul de débit) pendant un premier temps donné T (étape S22). Le compteur de fluide peut être configuré pour retourner en veille lorsque le générateur électrique 12 n'est plus entraîné par la circulation du fluide dans la canalisation de fluide 2, par exemple lorsqu'une tension aux bornes du générateur électrique devient quasi-nulle, inférieure à un seuil.

Ainsi, le compteur de fluide est apte à répondre immédiatement à toute sollicitation d'un utilisateur actionnant l'organe de commande B1 sans pourtant consommer de l'électricité en mode veille pour assurer la sortie de veille.

Le premier circuit 20 de sortie de veille et le deuxième circuit 30 de sortie de veille permettent de prévoir une veille très profonde et donc très énergétiquement économique, étant dépourvu de composants actifs nécessitant une alimentation, et pourtant permettent au compteur de fluide de remplir parfaitement et de manière réactive ses fonctions de mesures métrologiques et de gestion d'interface homme-machine. L'élément de stockage électrique est donc moins sollicité et peut être choisi avec une capacité de stockage énergétique moindre, avec par conséquent un encombrement réduit et un coût moins important, tout en préservant ou augmentant sa durée de vie.

L'invention n'est pas limitée au mode de réalisation décrit et représenté aux figures annexées. Des modifications restent possibles, notamment du point de vue de la constitution des diverses caractéristiques techniques ou par substitution d'équivalents techniques, sans sortir pour autant du domaine de protection de l'invention défini par les revendications en annexe.

## Revendications

1. Compteur de fluide configuré pour effectuer des mesures métrologiques dans une canalisation de circulation de fluide et pour communiquer des informations relatives auxdites données métrologiques, comprenant :
- un générateur électrique (12) configuré pour être entraîné par la circulation du fluide dans la canalisation de fluide (2) et générer de l'électricité,
- au moins un capteur métrologique (4) configuré pour effectuer des mesures métrologiques dans la canalisation de fluide (2),
- un bloc de commande (6) configuré pour recevoir les mesures métrologiques et pour communiquer des informations relatives auxdites données métrologiques, le compteur de fluide comprenant :
- un premier circuit (20) de sortie de veille couplé au générateur électrique (12) à une première extrémité (22) et au bloc de commande (6) à une seconde extrémité (24), le premier circuit (20) étant configuré pour générer un front sur un premier signal électrique (INT1) à la seconde extrémité (24) en réponse à l'établissement d'une tension à la première extrémité causée par l'entraînement du générateur électrique (12) par la circulation du fluide dans la canalisation (2), le bloc de commande étant configuré pour mettre en œuvre une sortie de veille du compteur de fluide en réponse au front sur le premier signal électrique (INT1) à la seconde extrémité (24), etun second circuit (30) de sortie de veille comprenant un organe de commande (B1) couplé au bloc de commande (6),
**caractérisé en ce que** l'organe de commande (B1) du second circuit de sortie de veille est configuré pour que son actionnement cause un front sur un second signal électrique (INT2) à une troisième extrémité (32) du bloc de commande (6),
le bloc de commande (6) étant configuré pour mettre en œuvre une sortie de veille du compteur de fluide en réponse au front sur le second signal électrique (INT2) à la troisième extrémité (32).

2. Compteur de fluide selon la revendication 1, dans lequel le compteur de fluide est configuré pour effectuer des mesures métrologiques dans la canalisation de fluide (2) suite à la sortie de veille, et pour retourner en veille en fonction de la circulation de fluide dans la canalisation (2).

3. Compteur de fluide selon la revendication 2, dans lequel le compteur de fluide est configuré pour retourner en veille lorsque des mesures métrologiques font état d'un débit nul pendant un premier temps donné ou lorsque le générateur électrique (12) n'est plus entraîné par la circulation du fluide dans la canalisation de fluide (2).

4. Compteur de fluide selon l'une quelconque des revendications précédentes, dans lequel le premier circuit (20) comprend un transistor (Q1) configuré pour devenir passant en réponse à l'établissement de la tension à la première extrémité (22).

5. Compteur de fluide selon la revendication précédente, dans lequel le transistor (Q1) a sa grille ou sa base connectée à la première extrémité (22) et à une première résistance (R1), et est connecté à une tension de tension de travail (Vcc) par une seconde résistance (R2), la seconde extrémité (24) sur lequel s'applique le premier signal électrique (INT1) étant connectée entre le transistor (Q1) et la seconde résistance (R2).

6. Compteur de fluide selon l'une quelconque des revendications précédentes, dans lequel le bloc de commande (6) est configuré pour mettre en œuvre une gestion d'interface homme-machine comprenant la communication d'informations relatives auxdites données métrologiques suite à la sortie de veille du compteur de fluide, le compteur de fluide étant configuré pour retourner en veille lorsqu'un critère de veille d'interface homme-machine est rempli.

7. Compteur de fluide selon la revendication précédente, dans lequel le critère de veille d'interface homme-machine est une absence d'actionnement de l'organe de commande (B1) pendant un second temps donné.

8. Compteur de fluide selon l'une quelconque des revendications précédentes, dans lequel la communication des informations relatives aux données métrologiques est effectuée par affichage sur un écran (7) et/ou par transmission desdites données métrologiques.

9. Compteur de fluide selon l'une quelconque des revendications précédentes, dans lequel le front est un front descendant.

10. Procédé de gestion de veille d'un compteur de fluide configuré pour effectuer des mesures métrologiques dans une canalisation de circulation de fluide et pour communiquer des informations relatives auxdites données métrologiques selon l'une quelconque des revendications précédentes,
le procédé comprenant :
- pendant une veille du compteur de fluide pendant laquelle un capteur métrologique (4) configuré pour effectuer des mesures métrologiques dans la canalisation de fluide (2) n'effectue pas de mesures métrologiques, la surveillance (S1) par un bloc de commande (6) de la survenue d'un front sur un premier signal électrique (INT1) à une seconde extrémité (24) d'un premier circuit (20) de sortie de veille couplé à une première extrémité (22) à un générateur électrique (12) configuré pour être entraîné par la circulation du fluide dans la canalisation de fluide (2) et générer de l'électricité,
- suite à la détection par le bloc de commande (6) d'un front sur le premier signal électrique (INT1) à la seconde extrémité (24), la mise en œuvre par le bloc de commande (6) d'une sortie de veille (S2) du compteur de fluide en réponse au front sur le premier signal électrique (INT1) à la seconde extrémité (24), et
- le bloc de commande (6) cause la mise en veille (S3) du compteur de fluide en fonction de la circulation de fluide dans la canalisation (2),
**caractérisé en ce que** le bloc de commande (6) :
- surveille (S10) pendant une veille du compteur de fluide la survenue d'un front sur un second signal électrique (INT2) à une troisième extrémité (32) d'un second circuit (30) de sortie de veille,
- met en œuvre une sortie de veille du compteur de fluide en réponse à un front sur le second signal électrique (INT2) à la troisième extrémité (32),
- met en œuvre une gestion d'interface homme-machine (S210) comprenant la communication d'informations relatives auxdites données métrologiques suite à la sortie de veille du compteur de fluide,
- cause la mise en veille du compteur de fluide (S30) lorsqu'un critère de veille d'interface homme-machine est rempli.

11. Produit programme d'ordinateur lisible par ordinateur comprenant des instructions qui, lorsque le programme est exécuté par un bloc de commande (6) d'un compteur de fluide selon l'une quelconque des revendications 1 à 9, conduisent ledit bloc de commande (6) à mettre en œuvre les étapes du procédé selon la revendication 10.

## Patentansprüche

1. Fluidzähler, der so konfiguriert ist, dass er metrologische Messungen in einem Fluidstromkanal durchführt und Informationen bezüglich der metrologischen Daten kommuniziert, umfassend:
- einen elektrischen Generator (12), der so konfiguriert ist, dass er durch den Fluidstrom in dem Fluidkanal (2) angetrieben wird und Elektrizität erzeugt,
- mindestens einen metrologischen Sensor (4), der so konfiguriert ist, dass er metrologische Messungen in dem Fluidkanal (2) durchführt,
- einen Steuerblock (6), der so konfiguriert ist, dass er die metrologischen Messungen empfängt und Informationen bezüglich der metrologischen Daten kommuniziert,
wobei der Fluidzähler umfasst
- eine erste Schaltung (20) zum Verlassen des Standby-Modus, die an einem ersten Ende (22) mit dem elektrischen Generator (12) und an einem zweiten Ende (24) mit dem Steuerblock (6) verbunden ist, wobei die erste Schaltung (20) so konfiguriert ist, dass sie eine Flanke auf einem ersten elektrischen Signal (INT1) an dem zweiten Ende (24) als Reaktion auf den Aufbau einer Spannung an dem ersten Ende erzeugt, die durch den Antrieb des elektrischen Generators (12) durch den Fluidstrom in dem Kanal (2) verursacht wird, wobei der Steuerblock so konfiguriert ist, dass er ein Verlassen des Standby-Modus durch den Fluidzähler als Reaktion auf die Flanke auf dem ersten elektrischen Signal (INT1) an dem zweiten Ende (24) implementiert, und eine zweite Schaltung (30) zum Verlassen des Standby-Modus, die ein mit dem Steuerblock (6) verbundenes Steuerelement (B1) umfasst,
**dadurch gekennzeichnet, dass** das Steuerelement (B1) der zweiten Schaltung zum Verlassen des Standby-Modus so konfiguriert ist, dass seine Betätigung eine Flanke auf einem zweiten elektrischen Signal (INT2) an einem dritten Ende (32) des Steuerblocks (6) verursacht,
wobei der Steuerblock (6) so konfiguriert ist, dass er ein Verlassen des Standby-Modus durch den Fluidzähler als Reaktion auf die Flanke auf dem zweiten elektrischen Signal (INT2) an dem dritten Ende (32) implementiert.

2. Fluidzähler nach Anspruch 1, wobei der Fluidzähler so konfiguriert ist, dass er nach dem Verlassen des Standby-Modus metrologische Messungen in dem Fluidkanal (2) durchführt und in Abhängigkeit von dem Fluidstrom in dem Kanal (2) in den Standby-Modus zurückkehrt.

3. Fluidzähler nach Anspruch 2, wobei der Fluidzähler so konfiguriert ist, dass er in den Standby-Modus zurückkehrt, wenn metrologische Messungen während einer ersten gegebenen Zeit einen Nulldurchfluss anzeigen oder wenn der elektrische Generator (12) nicht mehr durch den Fluidstrom in dem Fluidkanal (2) angetrieben wird.

4. Fluidzähler nach einem der vorstehenden Ansprüche, wobei die erste Schaltung (20) einen Transistor (Q1) umfasst, der so konfiguriert ist, dass er als Reaktion auf das Anlegen der Spannung am ersten Ende (22) leitend wird.

5. Fluidzähler nach dem vorstehenden Anspruch, wobei der Transistor (Q1) mit seinem Gate oder seiner Basis mit dem ersten Ende (22) und einem ersten Widerstand (R1) verbunden ist und über einen zweiten Widerstand (R2) mit einer Arbeitsspannung (Vcc) verbunden ist, wobei das zweite Ende (24), an dem das erste elektrische Signal (INT1) anliegt, zwischen den Transistor (Q1) und den zweiten Widerstand (R2) geschaltet ist.

6. Fluidzähler nach einem der vorstehenden Ansprüche, wobei der Steuerblock (6) so konfiguriert ist, dass er ein Mensch-Maschine-Schnittstellenmanagement implementiert, das die Übermittlung von Informationen bezüglich der metrologischen Daten nach dem Verlassen des Standby-Modus durch den Fluidzähler umfasst, wobei der Fluidzähler so konfiguriert ist, dass er in den Standby-Modus zurückkehrt, wenn ein Standby-Kriterium der Mensch-Maschine-Schnittstellen erfüllt ist.

7. Fluidzähler nach dem vorstehenden Anspruch, wobei das Standby-Kriterium der Mensch-Maschine-Schnittstelle ein Nichtbetätigen des Steuerelements (B1) für eine zweite gegebene Zeit ist.

8. Fluidzähler nach einem der vorstehenden Ansprüche, wobei die Übermittlung der Informationen bezüglich der metrologischen Daten durch Anzeige auf einem Bildschirm (7) und/oder durch Übertragung der metrologischen Daten erfolgt.

9. Fluidzähler nach einem der vorstehenden Ansprüche, wobei die Flanke eine fallende Flanke ist.

10. Verfahren zum Standby-Management eines Fluidzählers, der so konfiguriert ist, dass er gemäß einem der vorstehenden Ansprüche metrologische Messungen in einem Fluidstromkanal durchführt und Informationen bezüglich der metrologischen Daten kommuniziert, wobei das Verfahren umfasst:
- während eines Standby-Zustands des Fluidzählers, in dem ein metrologischer Sensor (4), der so konfiguriert ist, dass er metrologische Messungen in dem Fluidkanal (2) durchführt, keine metrologischen Messungen durchführt, Überwachung (S1) durch einen Steuerblock (6) auf das Auftreten einer Flanke auf einem ersten elektrischen Signal (INT1) an einem zweiten Ende (24) einer ersten Schaltung (20) zum Verlassen des Standby-Modus, die mit einem ersten Ende (22) mit einem elektrischen Generator (12) verbunden ist, der so konfiguriert ist, dass er durch den Fluidstrom in dem Fluidkanal (2) angetrieben wird und Elektrizität erzeugt,
- nach dem Erfassen einer Flanke auf dem ersten elektrischen Signal (INT1) an dem zweiten Ende (24) durch den Steuerblock (6), Implementieren eines Verlassens des Standby-Modus (S2) durch den Fluidzähler durch den Steuerblock (6) als Reaktion auf die Flanke an dem ersten elektrischen Signal (INT1) an dem zweiten Ende (24), und
- der Steuerblock (6) bewirkt den Übergang in den Standby-Modus (S3) des Fluidzählers in Abhängigkeit von dem Fluidstrom in dem Kanal (2),
**dadurch gekennzeichnet, dass** der Steuerblock (6):
- während eines Standby-Modus des Fluidzählers das Auftreten einer Flanke auf einem zweiten elektrischen Signal (INT2) an einem dritten Ende (32) einer zweiten Schaltung (30) zum Verlassen des Standby-Modus überwacht (S10),
- ein Verlassen des Standby-Modus durch den Fluidzähler als Reaktion auf die Flanke auf dem zweiten elektrischen Signal (INT2) an dem dritten Ende (32) implementiert,
- ein Mensch-Maschine-Schnittstellenmanagement (S210) implementiert, das die Übermittlung von Informationen bezüglich der metrologischen Daten nach dem Verlassen des Standby-Modus durch den Fluidzähler umfasst,
- veranlasst, dass der Fluidzähler (S30) in den Standby-Modus versetzt wird, wenn ein Standby-Kriterium der Mensch-Maschine-Schnittstelle erfüllt ist.

11. Computerlesbares Computerprogrammprodukt mit Anweisungen, die, wenn das Programm von einem Steuerblock (6) eines Fluidzählers nach einem der Ansprüche 1 bis 9 ausgeführt wird, den Steuerblock (6) dazu veranlassen, die Schritte des Verfahrens nach Anspruch 10 auszuführen.

## Claims

1. A fluid meter configured to perform metrological measurements in a fluid circulation pipe and to communicate information relating to said metrological data, comprising:
- an electric generator (12) configured to be driven by the circulation of the fluid in the fluid pipe (2) and to generate electricity,
- at least one metrological sensor (4) configured to perform metrological measurements in the fluid pipe (2),
- a control block (6) configured to receive the metrological measurements and to communicate information relating to said metrological data,
the fluid meter comprising:
- a first wake-up circuit (20) coupled to the electric generator (12) at a first end (22) and to the control block (6) at a second end (24), the first circuit (20) being configured to generate an edge on a first electrical signal (INT1) at the second end (24) in response to the establishment of a voltage at the first end caused by the driving of the electric generator (12) by the circulation of the fluid through the pipe (2), the control block being configured to implement a wake-up of the fluid meter in response to the edge on the first electrical signal (INT1) at the second end (24), and
- a second wake-up circuit (30) comprising a control member (B1) coupled to the control block (6) by a third end (32),
**characterized in that** the control member (B1) of the second wake up circuit is configured so that its actuation causes an edge on a second electrical signal (INT2) at the third end (32), the control block (6) being configured to implement a wake-up of the fluid meter in response to the edge on the second electrical signal (INT2) at the third end (32).

2. The fluid meter as claimed in claim 1, wherein the fluid meter is configured to perform metrological measurements in the fluid pipe (2) following the wake-up, and to go back to sleep as a function of the circulation of fluid through the pipe (2).

3. The fluid meter as claimed in claim 2, wherein the fluid meter is configured to go back to sleep when metrological measurements report a zero flow rate during a first given time or when the electric generator (12) is no longer driven by the circulation of the fluid through the fluid pipe (2).

4. The fluid meter as claimed in any of the preceding claims, wherein the first circuit (20) comprises a transistor (Q1) configured to turn on in response to the establishment of the voltage at the first end (22).

5. The fluid meter as claimed in the preceding claim, wherein the transistor (Q1) has its gate or its base connected to the first end (22) and to a first resistance (R1), and is connected to a work voltage (Vcc) by a second resistance (R2), the second end (24) to which the first electrical signal (INT1) is applied being connected between the transistor (Q1) and the second resistance (R2).

6. The fluid meter as claimed in any of the preceding claims, wherein the control block (6) is configured to implement the management of a human-machine interface comprising the communication of information relating to said metrological data following the wake-up of the fluid meter, the fluid meter being configured to go back to sleep when a human-machine interface sleep criterion is met.

7. The fluid meter as claimed in the preceding claim, wherein the human-machine interface sleep criterion is an absence of actuation of the control member (B1) for a second given time period.

8. The fluid meter as claimed in any of the preceding claims, wherein the communication of the information relating to the metrological data is done by display on a screen (7) and/or by transmission of said metrological data.

9. The fluid meter as claimed in any of the preceding claims, wherein the edge is a falling edge.

10. A method of management of the sleep of a fluid meter configured to perform metrological measurements in a fluid circulation pipe and to communicate information relating to said metrological data as claimed in any of the preceding claims,
the method comprising:
- during a sleep of the fluid meter, during which a metrological sensor (4) configured to perform metrological measurements in the fluid pipe (2) does not perform any metrological measurements, the monitoring (S1) by a control block (6) of the occurrence of an edge on a first electrical signal (INT1) at a second end (24) of a first wake-up circuit (20) coupled at a first end (22) to an electric generator (12) configured to be driven by the circulation of the fluid through the fluid pipe (2) and to generate electricity,
- following the detection by the control block (6) of an edge on the first electrical signal (INT1) at the second end (24), the implementation by the control block (6) of a wake-up (S2) of the fluid meter in response to the edge on the first electrical signal (INT1) at the second end (24), and
- the control block (6) causes the fluid meter to go to sleep (S3) as a function of the circulation of fluid through the pipe (2),
**characterized in that** the control block (6):
- monitors (S10), during a sleep of the fluid meter, the occurrence of an edge on a second electrical signal (INT2) at a third end (32) of a second wake-up circuit (30),
- implements a wake-up of the fluid meter in response to an edge on the second electrical signal (INT2) at the third end (32),
- implements a management of the human-machine interface (S210) comprising the communication of information relating to said metrological data following the wake-up of the fluid meter,
- causes the fluid meter to go to sleep (S30) when a human-machine interface sleep criterion is met.

11. A computer-readable computer program product comprising instructions which, when the program is executed by a control block (6) of a fluid meter as claimed in any of claims 1 to 9, lead said control block (6) to implement the steps of the method as claimed in claim 10.
